# EUROPEAN PATENT APPLICATION

(11) **EP 4 823 244 A1**
(43) Date of publication of application: **14.10.2026**
(21) Application number: 25168990.7
(22) Date of filing: 08.04.2025
(51) Int. Cl.: H05B 45/3725, H02M 1/00, H02M 3/335, H05B 45/355, H05B 45/382, H05B 45/385

(54) **METHOD FOR OPERATING AN OPERATING DEVICE AND THE CORRESPONDING OPERATING DEVICE**

(71) Applicant: Tridonic GmbH & Co. KG, 6851 Dornbirn (AT)
(72) Inventor: Romano, Fabio, 6851 Dornbirn (AT); Schneider, Miguel Philipp, 6851 Dornbirn (AT); Lochmann, Frank, 6851 Dornbirn (AT)
(74) Representative: Rupp, Christian

(57) **Abstract**

The invention is related to a method for controlling an operating device of a load, wherein the operating device comprises a converter, comprising the steps of:
determining (S11), by a controller, an operating mode to be a normal mode or a standby mode of the operating device; and in case the determined operating mode is the normal mode, controlling (S21), by the controller, the first output of the converter to output a target voltage; and in case the determined operating mode is the standby mode, controlling (S22), by the controller, the second output of the converter to output the target voltage; wherein the first output of the converter provides a voltage to the load and the second output of the converter provides a voltage for operating the controller.

## Description

This invention refers to a method for operating an operating device and the operating device.

Operating devices are generally used provide power to a load. Moreover, the power is generally drawn from external power sources, such that a converter is required in the operating device. In particular, the converter converts an input voltage into an output voltage, whereas the level of the output voltage is either reduced or increased due to the power conversion. The output voltage is used for supplying electric power to drive the load. Hereinafter, this output is referred to as the main output. In addition, converters often comprise an auxiliary output, which is used to supply a low voltage power source (LVPS) with an auxiliary voltage. The LVPS is used for supplying the controller with power.

Such operating devices are commonly used in lighting systems in order to drive LED loads. Hereinafter, an LED will be used exclusively to be the load for explaining the invention.

The operating device also comprises controller configured to control the supply of power to a load connected to the operating device. The controller monitors the output voltage of the main output of the converter and controls the converter to output a target voltage from the main output based on the monitored output voltage. This provides a generally stable control method for operating the load. Such an operation can be for example an on state or PWM controlled operation of the load.

However, in case the load is not being operated, this control procedure may cause failure of the controller. The voltage being monitored and used for the voltage control of the controller is the output voltage of the main output of the converter. In case the load is not being operated the monitored voltage exceeds the target voltage, as controlling the main output is not stable in this case. In consequence, the controller will control the converter, such that no power is transferred to the auxiliary port. Thus, the LVPS will not be able to consistently support the controller with enough power. As a consequence, the controller will shut down. This shutdown of the controller is not desired and it states a major drawback.

Known solutions suggest to provide an element for stabilization of the dissipated power of the power being outputted at the main output of the converter. Such an element may be e.g. a resistor that is connected in parallel to the main output of the converter. Such a resistor ensures power transfer towards the auxiliary output even in case the load is not being operated.

A major drawback of such a solution is the energy loss caused by power consumed by the resistor.

In order to overcome the above mentioned technical problem, a method for controlling an operating device for driving a load and a respective operating device according to the enclosed independent claims are provided. The invention is defined in the appended independent claims. Advantageous features and aspects of the present invention are defined in the corresponding dependent claims.

A method for controlling an operating device of a load, wherein the operating device comprises a converter, comprises the step of determining, by a controller, an operating mode to be a normal mode or a standby mode of the operating device. The normal mode is a mode in which the load is being operated by the operating device to drive the load, and the standby mode is a mode in which the load is not being operated by the operating device, for example in case that the LED is switched off. In case the determined operating mode is the normal mode, the method comprises the step of controlling, by the controller, the first output of the converter to output a target voltage for supplying electrical energy to the LED. In case the determined operating mode is the standby mode, the method comprises the step of controlling, by the controller, the second output of the converter to output the target voltage. The first output of the converter provides a voltage to the load and the second output of the converter provides a voltage for operating the controller.

The operating device is generally any device that is capable of providing electrical power to the load. The operating device may be an LED driver.

Additionally, the operating device may comprise input connectors for a power supply to be connected. The power supply may be an AC voltage power supply, e.g. the mains network. Additionally, the operating device may comprise a power factor correction (PFC) circuit. Additionally, the operating device may comprise a LVPS for providing electrical energy to the controller. Additionally, the operating device may comprise a switch for connecting a load to the first output of the converter. Additionally, the operating device may comprise an integrated circuit for receiving control signals from the controller and switching at least one switch of the converter based on the received control signals. Additionally, the operating device may comprise a voltage sensor for measuring the voltage at the first output of the converter. Additionally, the operating device may comprise a voltage sensor for measuring the voltage at the second output of the converter.

The controller may particularly be realized as a Central Processing Unit (CPU), a Graphics Processing Unit (GPU), a Field Programmable Gate Array (FPGA), an Application-Specific Integrated Circuit (ASIC), a Digital Signal Processor (DSP) or a Microcontroller (MCU).

The controller is configured to control the first or second output of the converter to output the target voltage. Additionally, the controller comprises two inputs for respectively determining the voltage of the first and second output of the converter. In particular, the voltage may be determined by the controller through internal voltage measurement or by evaluating the information obtained via the two inputs. For instance, the two inputs may respectively be connected to the voltage sensors of the operating device.

Additionally, the controller is configured to control if a load is being operated by the operating device.

Additionally or alternatively, the controller may be configured to obtain information based on which the operating mode of the operating device is determined. For instance, based on the information a state of the switch that connects the load with the first output of the converter may be determined.

Additionally, based on the information, a state of PWM control by the controller may be determined. Thus, the controller may determine that if a PWM state is "off", meaning that no PWM signal is provided to the switch that connects the load with the first output of the converter, and that if said switch is in an "off" state, meaning that a power supply from the operating device to the load is interrupted and the load is switched off, that the operating mode is a standby mode. Here, the PWM state and the state of said switch are evaluated together, since the PWM signal may also provide "off" states which are used for dimming, e.g. LED. Thus, when an LED is being dimmed, the operating mode is determined to be the normal mode.

The converter comprised in the operating device is generally any device that converts an input voltage into an output voltage. The converter may be a DC-DC converter, especially a resonant hybrid flyback converter. However, the converter may be any kind of a buck converter, a boost converter, a buck-boost converter or the like. Specific alternatives may be phase-shifted full bridge converters, LLC resonant converters, half-bridge converters or the like. Additionally or alternatively, the converter is a switched-mode power supply.

In the context of this disclosure, the normal mode is a mode in which the load is being operated by the operating device. As long as a driving functionality is executed, even cases when the load is not being provided with power are understood to be cases in which the load is being operated. For instance, a load being supplied with a PWM control, such that for some limited time interval no power is being provided to the load is understood as being operated as e.g. in the context of LED, the PWM control is used for a dimming functionality.

The target voltage may differ for the control during normal mode and control during standby mode. In particular, the target voltage is either the voltage required to be outputted by the first or second output of the converter. For instance, the LED may require to be driven with 2V, such that the target voltage of the first output of the converter is 2V. For instance, the LVPS for supplying the controller requires a voltage of 1V, such that the target voltage of the second output of the converter is 1V. However, both could be the same.

An advantageous effect of the foregoing embodiment is that the voltage control of the controller is mode dependent. Moreover, during the time when the load is not driven by the operating device, the second output is controlled to output its target voltage. Thus, a further effect is that the power supply for the controller is ensured when the load is not being operated. Moreover, since this solution does not require any additional electrical element, particularly a resistor at the first output, the energy loss of a passive element is avoided and efficiency of the operating device is increased.

In an embodiment of the method, in case of controlling the first output of the converter to output the target voltage, the control is based on a voltage outputted at the first output of the converter. Moreover, in case of controlling the second output of the converter to output the target voltage, the control is based on a voltage outputted at the second output of the converter.

An advantageous effect of the foregoing embodiment is that it enables independent and precise regulation of multiple outputs of the converter. This improves the stability, efficiency, and overall performance of the converter system. By that, it can be avoided that the voltage control is dependent on solely one outputted voltage, e.g. at the first output as known already. In particular, it could be avoided to undesirably control the second converter in case the outputted voltage at the first output of the converter is unstable as mentioned in the introduction.

In an embodiment of the method, in case of controlling the first output of the converter to output the target voltage, the control is based on a feedback control, wherein the feedback value corresponds to the voltage outputted at the first output of the converter. Moreover, in case of controlling the second output of the converter to output the target voltage, the control is based on a feedback control, wherein the feedback value corresponds to the voltage outputted at the second output of the converter. The feedback values may directly be formed by measured output voltages.

An advantageous effect of the foregoing embodiment is that a feedback control is provided for the first and second output, whereby the feedback value is set to correspond to the control variable. That means, in case the voltage outputted at the first output of the converter is controlled, this voltage also corresponds to the feedback value of the feedback control. Similarly this is the case if the output voltage of the second output of the converter is controlled, whereby the feedback value corresponds to the outputted voltage at the second output of the converter.

In an embodiment of the method, the method further comprises the step of controlling, by the controller, a switching frequency of at least one switch of the converter based on the determined operating mode, such that the first or second output of the converter outputs the target voltage.

An advantageous effect of the foregoing embodiment is that a mode dependent control method for switched-mode power supplies is provided.

In an embodiment of the method, the load is a LED.

An advantageous effect of the foregoing embodiment is that the control method is provided for operating devices of LED's.

In the following, embodiments of operating devices are described, that correspond to the embodiments of the methods.

Consequently, advantageous effects are similarly valid for the embodiments of the operating device.

An operating device comprises a converter and a controller. The controller is configured to determine an operating mode to be a normal mode or a standby mode of the operating device. The normal mode is a mode in which the load is being operated by the operating device and the standby mode is a mode in which the load is not being operated by the operating device. The controller is further configured to control the first output of the converter to output a target voltage in case the determined operating mode is the normal mode, and to control the second output of the converter to output the target voltage in case the determined operating mode is the standby mode. The first output of the converter is configured for providing a voltage to a load and the second output of the converter is configured for providing a voltage for operating the controller.

In an embodiment of the operating device, the controller is configured to control the first output of the converter to output the target voltage based on a voltage outputted at the first output of the converter. In addition, the controller is configured to control the second output of the converter to output the target voltage based on a voltage outputted at the second output of the converter.

In an embodiment of the operating device, the controller is configured to control the first output of the converter to output the target voltage based on a feedback control, wherein the feedback value corresponds to the voltage outputted at the first output of the converter. In addition, the controller is configured to control the second output of the converter to output the target voltage based on a feedback control, wherein the feedback value corresponds to the voltage outputted at the second output of the converter.

In an embodiment of the operating device, the controller is configured to control a switching frequency of at least one switch of the converter based on the determined operating mode, such that the first or second output of the converter outputs the target voltage.

In the following, preferred embodiments of the present application shall be described in more detail based on the corresponding figures.
Figure 1 is a schematic view of an operating device according to an embodiment.
Figure 2 is a flowchart of a method according to an embodiment.

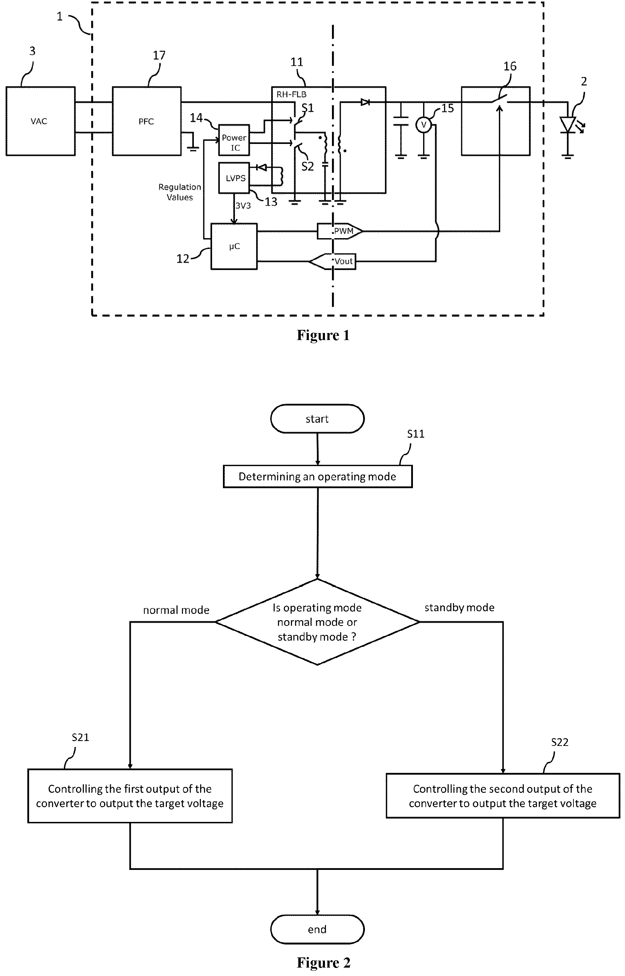

Figure 1 is a schematic view of an operating device 1 according to an embodiment.

The operating device comprises a resonant hybrid flyback converter (RH-FLB) 11, a microcontroller 12, a LVPS 13, a power integrated circuit (IC) 14, a voltage sensor 15, a load switch 16 and a PFC 17.

The PFC 17 is connected to an external power supply (VAC) 3, which may be the mains network. The VAC 3 provides AC power to the operating device 1. The PFC 17 improves the efficiency of the power that is provided by the VAC 3. This can be exemplarily achieved by filtering harmonics out of the power signal and by reducing a phase shift between the current and the voltage provided by the VAC 3.

The output of the PFC 17 is supplied to the RH-FLB 11. Generally, the output of the PFC 17 still provides an AC power signal.

The RH-FLB 11 comprises a first stage in form of a half-bridge switch setup. The first stage comprises two switches S1, S2 attached in a half-bridge configuration. Moreover, the RH-FLB 11 comprises a second stage that forms the transformer comprising a primary side inductance and a secondary side inductance. Additionally, the RH-FLB comprises a diode over which a current is provided to load a capacitor.

Generally, AC power is provided by the PFC 17 towards the first stage of the RH-FLB 11. The switches S1, S2 are operated by the power IC 14, such that when one switch is in an "on" state, the other switch is in an "off" state. The switches are turned "on" and "off" by a certain switching frequency controlled by the microcontroller 12. During the first half of the AC power signal, the switch S1 is turned "on", such that the primary side inductor builds up a magnetic field (the inductance is being "charged") in which the electrical energy of the AC power signal is stored. During the second half of the AC power signal, the switch is turned "off", such that the primary side inductor releases its energy (the inductance is being "discharged"). By law of induction, on the secondary side inductance a voltage may be induced during the "charging" and "discharging" phase of the inductance. On the secondary side, the secondary inductor is only "charged" during one half cycle of the AC power signal, such that the necessary DC power signal is obtained.

The DC power as outputted by the RH-FLB 11 is then provided to an LED 2 in case a switch 16 is in an "on" state. Otherwise, no power is provided to the LED 2.

The RH-FLB 11 also provides an auxiliary inductance that is a small inductance on the primary side of the transformer, which is induced in the similar way as explained before by the primary side. This auxiliary inductance induces a small voltage to provide power to the LVPS 13.

The LVPS 13 is used to supply the microcontroller 12.

The microcontroller 12 is configured to control a switching frequency of the switches S1, S2 for regulating the output voltage of the secondary side or the output of the auxiliary inductance. The microcontroller 12 provides control signals to the power IC 14 for controlling the switching frequency of the power IC 14.

The power IC 14 provides switching signals to the switches S1, S2 based on the control signals provided by the controller 12.

The microcontroller 12 is configured to provide switching signals to the switch 16 for controlling if power is provided to the LED 2.

The voltage sensor 15 provides a measured voltage of the output on the secondary side of the RH-FLB 11 to the microcontroller 12.

Additionally, a voltage sensor is providing a measured voltage of the output of the auxiliary side of the RH-FLB 11 to the microcontroller 12, which is not illustrated due to increase of readability.

The microcontroller 12 is configured to determine the operating mode of the operating device 1.

The microcontroller 12 knows the state of the switch 16, because the switch 16 is controlled by a signal provided by the microcontroller 12.

In case the switch 16 is in an "on" state, the microcontroller 12 determines that the operating device 1 is in a normal mode.

In case the switch 16 is in an "off" state, the microcontroller 12 determines whether the "off" state is related to a desired operation of the LED 2. For instance, during the PWM operation of the switch 16, a dimming functionality of the LED 2 is achieved. In case the microcontroller 12 determines that the switch is "off" but the microcontroller 12 performs a certain driving functionality of the LED 2 by PWM dimming, the normal mode is determined. In case the microcontroller 12 determines that the switch is "off" and the microcontroller 12 does not perform a driving functionality of the LED 2, the standby mode is determined.

When the operating mode of the operating device 1 is the normal mode, the microcontroller controls the switching frequency of the switches S1, S2 based on the voltage of the secondary output of the RH-FLB 11. In this case, the switching frequency is controlled to ensure that the auxiliary output outputs the voltage that is required for the LED 2.

When the operating mode of the operating device 1 is the standby mode, the microcontroller controls the switching frequency of the switches S1, S2 based on the voltage of the auxiliary output of the RH-FLB 11. In this case, the switching frequency is controlled independently from the secondary side to ensure that the auxiliary output outputs the voltage that is required for operation of the LVPS 13.

Thus, it can be avoided that the secondary side is controlled during the standby mode, since the voltage provided at the secondary side is irrelevant when the LED 2 is not being operated. Moreover, when the LED 2 is not being operated (switched off), the voltage at the secondary side measured by voltage sensor 15 exceeds the required voltage, because no load is available on the secondary side to cause a voltage drop below the secondary side target voltage. As a consequence, a state of the art microcontroller would control the switching frequency such that the voltage is reduced, which results in controls where the required power at the auxiliary side is not obtained anymore. Since primary side output is not controlled, the microcontroller of the state of the art does not prevent undercut of the voltage required by the LVPS 13. Thus, in the state of the art, the LVPS 13 does not provide sufficient power to the microcontroller and the microcontroller is turned off.

As mentioned above, the embodiment of Figure 1 is able to ensure supply of sufficient power for the LVPS 13 such that a stable operation of the microcontroller 13 is ensured during the standby mode of the operating device 1.

The internal data exchange link may be any one of Inter-Integrated Circuit (I2C), Serial Peripheral Interface (SPI), Universal Asynchronous Receiver/Transmitter (UART), Controller Area Network (CAN), Universal Serial Bus (USB), General Purpose Input/Output (GPIO), Peripheral Component Interconnect Express (PCIe) or Ethernet.

The connections depicted in Figure 1 are implemented using printed wiring on a printed circuit board (PCB). However, this system may also be realized using alternative wiring and circuit construction methods. It is important to note that Figure 1 provides only a schematic representation of the operating device. The operating device may also include additional components not shown in Figure 1, such as supplementary wiring and circuit elements typically found in similar systems, particularly in driver circuits for LEDs.

Figure 2 is a flowchart of a method according to an embodiment.

Figure 2 is especially a method that can be performed by the controller of the invention as described by the introductory part of this disclosure and as described for one embodiment if Figure 1. Moreover, any above mentioned functionality of the controller or any other component mentioned above, and especially above mentioned definitions of terms shall be considered for the method shown in Figure 2.

It is shown a step S1 for determining, by a controller 12, an operating mode to be a normal mode or a standby mode of the operating device, wherein the normal mode is a mode in which the load is being operated by the operating device and the standby mode is a mode in which the load is not being operated by the operating device.

In case the determined operating mode is the normal mode, the step S21 is performed.

The step S21 shows a step for controlling, by the controller 12, the first output of the converter to output the target voltage.

In case the determined operating mode is the normal mode, the step S22 is performed.

The step S22 shows a step for controlling, by the controller 12, the second output of the converter to output the target voltage.

The step S21 may also comprise controlling, by the controller 12, a switching frequency of at least one switch of the RH-FLB 11 based on the determined operating mode, such that the primary side of the RH-FLB 11 outputs the target voltage.

The step S22 may also comprise controlling, by the controller 12, a switching frequency of at least one switch of the RH-FLB 11 based on the determined operating mode, such that the auxiliary side of the RH-FLB 11 outputs the target voltage.

In case of controlling the primary side of the RH-FLB 11 to output the target voltage, the control is based on a voltage outputted at the primary side of the RH-FLB 11; and in case of controlling the auxiliary side of the RH-FLB 11 to output the target voltage, the control is based on a voltage outputted at the auxiliary side of the RH-FLB 11.

In case of controlling the primary side of the RH-FLB 11 to output the target voltage, the control is based on a feedback control, wherein the feedback value corresponds to the voltage outputted at the primary side of the RH-FLB 11; and in case of controlling the auxiliary side of the RH-FLB 11 to output the target voltage, the control is based on a feedback control, wherein the feedback value corresponds to the voltage outputted at the auxiliary side of the RH-FLB 11.

In the context of this disclosure, when it is mentioned that a side of the RH-FLB 11 is controlled it is meant that the output of the side is controlled. Additionally when it is mentioned that an output is controlled, it is meant that the output signal, e.g. the output voltage is controlled.

## Claims

1. Method for controlling an operating device of a load (2), wherein the operating device comprises a converter (11), comprising the steps of:
determining (S11), by a controller (12), an operating mode to be a normal mode or a standby mode of the operating device, wherein the normal mode is a mode in which the load (2) is being operated by the operating device and the standby mode is a mode in which the load (2) is not being operated by the operating device; and
in case the determined operating mode is the normal mode:
controlling (S21), by the controller (12), a first output of the converter (11) to output a target voltage; and
in case the determined operating mode is the standby mode:
controlling (S22), by the controller (12), a second output of the converter (11) to output the target voltage; wherein
the first output of the converter (11) provides a voltage for driving the load (2) and the second output of the converter (11) provides a voltage for operating the controller (12).

2. Method according to claim 1, wherein
in case of controlling the first output of the converter (11) to output the target voltage, controlling is based on a voltage outputted at the first output of the converter (11); and
in case of controlling the second output of the converter (11) to output the target voltage, controlling is based on a voltage outputted at the second output of the converter (11).

3. Method according to claim 2, wherein
in case of controlling the first output of the converter (11) to output the target voltage, controlling is based on a feedback control, wherein the feedback value corresponds to the voltage outputted at the first output of the converter (11); and
in case of controlling the second output of the converter (11) to output the target voltage, controlling is based on a feedback control, wherein the feedback value corresponds to the voltage outputted at the second output of the converter (11).

4. Method according to any of the preceding claims, comprising the step of
controlling (S21, S22), by the controller (12), a switching frequency of at least one switch (S1, S2) of the converter (11) based on the determined operating mode, such that the first or second output of the converter (11) outputs the target voltage.

5. Method according to any of the preceding claims, wherein
the load is a LED (2).

6. An operating device, comprising:
a converter (11); and
a controller (12) that is configured to:
determine an operating mode to be a normal mode or a standby mode of the operating device, wherein the normal mode is a mode in which the load (2) is being operated by the operating device and the standby mode is a mode in which the load (2) is not being operated by the operating device; and
control the first output of the converter (11) to output a target voltage in case the determined operating mode is the normal mode, and to control the second output of the converter (11) to output the target voltage in case the determined operating mode is the standby mode; wherein
the first output of the converter (11) is configured for providing a voltage to the load (2) and the second output of the converter (11) is configured for providing a voltage for operating the controller (12).

7. An operating device according to claim 6, wherein
the controller (12) is configured to control the first output of the converter (11) to output the target voltage based on a voltage outputted at the first output of the converter (11); and
the controller (12) is configured to control the second output of the converter (11) to output the target voltage based on a voltage outputted at the second output of the converter (11).

8. An operating device according to claim 7, wherein
the controller (12) is configured to control the first output of the converter (11) to output the target voltage based on a feedback control, wherein the feedback value corresponds to the voltage outputted at the first output of the converter (11); and
the controller (12) is configured to control the second output of the converter (11) to output the target voltage based on a feedback control, wherein the feedback value corresponds to the voltage outputted at the second output of the converter (11).

9. An operating device according to any of the claims 6 to 8, wherein
the controller (12) is configured to control a switching frequency of at least one switch (S1, S2) of the converter (11) based on the determined operating mode, such that the first or second output of the converter (11) outputs the target voltage.
